# EUROPEAN PATENT APPLICATION

(11) **EP 2 150 030 A1**
(43) Date of publication of application: **03.02.2010**
(21) Application number: 08752393.2
(22) Date of filing: 07.05.2008
(51) Int. Cl.: H04M 1/02

(54) **SLIDING DEVICE AND ELECTRONIC DEVICE USING SLIDING DEVICE**

(30) Priority: 18.05.2007 JP 2007133344; 25.12.2007 JP 2007332933
(71) Applicant: Kabushiki Kaisha Strawberry Corporation, Tokyo 171-0021 (JP)
(72) Inventor: KUBOTA, Naoki, Tokyo 171-0021 (JP)
(74) Representative: Prinz & Partner
(86) International application number: PCT/JP2008/058501
(87) International publication number: WO 2008/142996

(57) **Abstract**

A sliding device and an electronic device using this sliding device are provided, wherein an elastic part that can be conveniently mass produced is developed, which has heretofore been unattained, and mass productivity and cost effectiveness are improved using this elastic part. The sliding device is configured such that one end and another end of an elastic part (3) are linked respectively to a slidable first member (1) and second member (2), and an urging force in the sliding direction is created between the first member (1) and the second member (2) by the elastic urging of the elastic part (3). In this sliding device, the elastic part (3) is an elastically bendable flat-plate bendable elastic part (3) that has linking end parts (3b) for linking respectively with the first member (1) and second member (2) at both ends of a flat-plate part (3a) having a flat wire shape, a frame shape, or another thin plate shape, and that is configured so that the flat-plate part (3a) can be elastically and bendably deformed in the direction of the plate surface so that the linking end parts (3b) at both ends move towards and away from each other.

## Description

### TECHNICAL FIELD

The present invention relates to a sliding device, and to a portable phone, a mobile device, or another electronic device that uses the sliding device.

### BACKGROUND ART

For example, in conventional practice there have been portable phones having sliding structures in which an operating part arrayed with numeral keys and function keys is provided to the top surface of a main body part, a liquid crystal panel or another display part for showing a predetermined display is provided to the top surface of a superposed part superposed on the main body part, and the main body part and superposed part are slid relative to each other in a longitudinal direction. Other examples include portable phones having rotatably sliding structures wherein the parts rotatably slide in the direction of the superposed surface, and combination structures wherein the phone is used after the parts are slid open and then rotated 90° and rotatably switched into a T formation.

For example, the sliding structure has a configuration in which guide rail parts as slide-guiding parts are provided either directly or indirectly (meaning that members provided to the main body part are also included) at a transverse gap from each other on the superposed part, sliding parts that slidably engage with the left and right guide rail parts are provided either directly or indirectly to the main body part, and the sliding parts slide in relation to the guide rail parts, whereby the superposed part and main body part are slidably linked together.

A sliding device which implements this sliding structure of a portable slider phone has a configuration in which the sliding parts are slidably engaged at the ends between the slide-guiding parts provided to the transverse sides as previously described, and the superposed part is slidably linked to the main body part.

In the case of a rotatable slider structure, the configuration is such that, e.g., the main body part is provided with arcuate guide grooves or other slide-guiding parts which act as guides when the superposed part rotates about a fulcrum part as a rotating fulcrum, the superposed part is provided with sliding parts which rotatably and slidably engage with the slide-guiding parts, the superposed part pivots at the rotating fulcrum, the guide parts rotatably and slidably engage with the slide-guiding parts, and the superposed part is rotatably and slidably linked to the main body part.

A rotating slider portable phone having a sliding structure using a sliding device for slidably, or both rotatably and slidably, linking the main body part and superposed part in this manner is preferably configured so as to be kept in position (in a clickable engagement or by being urged toward being opened or closed) in either a superposed closed position in which the operating part of the main body part is concealed by the superposed part, or an open position in which the superposed part is moved in the longitudinal direction or the rotational direction, and the operating part is exposed in a positional misalignment.

In view of this, in order to respond to such requirements, sliding devices have been provided in configurations in which one end of an elastic part is linked directly or indirectly to a first member while the other end is linked directly or indirectly to a second member, and a force that urges the members to return (close) or advance (open) is created between the first member and the second member by a clamping force acting on the elastic part.

In other words, the configuration is such that, e.g., a torsion spring is used as the elastic part, the torsion spring being formed into a V shape in an overall view in which a wire material is wound multiple times into a coil in the middle between both ends of the wire material and the coiled part is the apex of the V shape, one end of the torsion spring is linked to the first member, the other end is linked to the second member, and urging is created in the sliding direction when the second member is slid or rotatably slid in relation to the first member by a force created by the spring (spreading force) to separate the linking parts at the ends of the torsion spring away from each other.

According to this conventional device, an urging force in the sliding direction resulting from the spreading force of the elastic part is used, whereby a position-maintaining function is achieved in which, e.g., urging acts to close the superposed part to a predetermined moved position relative to the main body part of the portable slider phone, and the superposed part is kept positioned in the superposed closed position. When the superposed part is moved to the predetermined position relative to the main body part, an opening force then acts to keep the superposed part positioned in the slid open position.
[Patent Document 1] Japanese Laid-open Patent Application No. 2005-291315

### DISCLOSURE OF THE INVENTION

### PROBLEMS THE INVENTION IS INTENDED TO SOLVE

In these types of sliding devices, various configurations can be used as the elastic part, such as spring units made by assembling in parallel a plurality of e.g., torsion springs for creating the aforementioned spreading force, or e.g., anti-compression springs on a reciprocating unit base. In any case, since a conventional elastic part requires a complicated manufacturing operation such as winding a wire material into a coil, for example, manufacturing is thereby rendered troublesome and costly, consequently causing the cost of manufacturing this type of sliding device to increase, and requiring a large interposing space without providing a thinner profile. Therefore, with this elastic part, there is a demand for further improvement in mass productivity and cost effectiveness while obtaining thinner shapes and a satisfactory elastic force.

In view of the circumstances described above, an object of the present invention is to provide a revolutionary sliding device whereby a sliding urging function can be satisfactorily exhibited by the urging of an elastic part as in conventional practice; an elastic part which can be made thinner and conveniently mass produced (heretofore unattained qualities) can be developed with no need for a complicated manufacturing operation such as in the case of a torsion spring, a spring unit, or the like; mass productivity and cost effectiveness can be improved using this elastic part; the shape can be made thinner; and space can be conserved. It is also an object of the present invention to provide an electronic device that uses this sliding device.

### MEANS FOR SOLVING THESE PROBLEMS

The scope of the present invention will be described with reference to the accompanying drawings.

The present invention relates to a sliding device for linking a second member 2 superposed over a first member 1 so as to enable the second member to slide in the direction of a superposed surface or to rotatably slide in the direction of a superposed surface, the sliding device comprising a slide-guiding part 4 provided to the first member 1 or the second member 2; a sliding part 5 provided to the second member 2 or the first member 1 and either slidably or both rotatably and slidably engaged with the slide-guiding part 4; and an elastic part 3 for creating an urging force in the sliding direction when the second member 2 is slid or rotatably slid in the direction of a superposed surface relative to the first member 1, the elastic part 3 being provided between the first member 1 and second member 2, linked at one end to the first member 1, and linked at the other end to the second member 2, the sliding device **characterized in that** the elastic part 3 is an elastically and bendably deformable flat-plate bendable elastic part 3 having linking end parts 3b linked directly or indirectly to the first member 1 and the second member 2 respectively, at both ends of a flat-plate part 3a having a flat wire shape, a frame shape, or another thin plate shape; and the flat-plate part 3a is configured to be capable of elastically and bendably deforming in the direction of the plate surface so that the linking end parts 3b at both ends move towards and away from each other.

The present invention also relates to the sliding device according to the first aspect, **characterized in that** the flat-plate bendable elastic part 3 is configured by punching a thin plate material to form the flat-plate part 3a and the linking end parts 3b at both ends thereof.

The present invention also relates to the sliding device according to the first aspect, **characterized in that** the flat-plate bendable elastic part 3 is configured by integrally forming the flat-plate part 3a and the linking end parts 3b at both ends thereof by die formation.

The present invention also relates to the sliding device according to the first aspect, **characterized in that** the flat-plate bendable elastic part 3 is configured by bending a flat wire having a square shape in cross section and forming the flat-plate part 3a or the flat-plate part 3a and the linking end parts 3b at both ends thereof.

The present invention also relates to the sliding device according to the first aspect, **characterized in that** the flat-plate bendable elastic part 3 has a configuration wherein the flat-plate part is formed between the linking end parts 3b at both ends into a shape in which at least two plate-wire shaped parts are aligned at a predetermined gap from each other in the width direction.

The present invention also relates to the sliding device according to the second aspect, **characterized in that** the flat-plate bendable elastic part 3 has a configuration wherein the flat-plate part is formed between the linking end parts 3b at both ends into a shape 3a in which at least two plate-wire shaped parts are aligned at a predetermined gap from each other in the width direction.

The present invention also relates to the sliding device according to the third aspect, **characterized in that** the flat-plate bendable elastic part 3 has a configuration wherein the flat-plate part is formed between the linking end parts 3b at both ends into a shape 3a in which at least two plate-wire shaped parts are aligned at a predetermined gap from each other in the width direction.

The present invention also relates to the sliding device according to the fourth aspect, **characterized in that** the flat-plate bendable elastic part 3 has a configuration wherein the flat-plate part is formed between the linking end parts 3b at both ends into a shape 3a in which at least two plate-wire shaped parts are aligned at a predetermined gap from each other in the width direction.

The present invention also relates to the sliding device according to the fifth aspect, **characterized in that** the flat-plate bendable elastic part 3 has a configuration wherein the flat-plate part 3a is formed into a frame shape having a hole in the center of a thin plate material, and the flat-plate part 3a is formed into a shape in which at least two plate-wire shaped parts as frame edges are aligned between the linking end parts 3b at both ends at a predetermined gap from each other in the width direction.

The present invention also relates to the sliding device according to the sixth aspect, **characterized in that** the flat-plate bendable elastic part 3 has a configuration wherein the flat-plate part 3a is formed into a frame shape having a hole in the center of a thin plate material, and the flat-plate part 3a is formed into a shape in which at least two plate-wire shaped parts as frame edges are aligned between the linking end parts 3b at both ends at a predetermined gap from each other in the width direction.

The present invention also relates to the sliding device according to the seventh aspect, **characterized in that** the flat-plate bendable elastic part 3 has a configuration wherein the flat-plate part 3a is formed into a frame shape having a hole in the center of a thin plate material, and the flat-plate part 3a is formed into a shape in which at least two plate-wire shaped parts as frame edges are aligned between the linking end parts 3b at both ends at a predetermined gap from each other in the width direction.

The present invention also relates to the sliding device according to the eighth aspect, **characterized in that** the flat-plate bendable elastic part 3 has a configuration wherein the flat-plate part 3a is formed into a frame shape having a hole in the center of a thin plate material, and the flat-plate part 3a is formed into a shape in which at least two plate-wire shaped parts as frame edges are aligned between the linking end parts 3b at both ends at a predetermined gap from each other in the width direction.

The present invention also relates to the sliding device according to the fourth aspect, **characterized in that** the flat-plate bendable elastic part 3 is configured by bending in alternating directions a flat wire having a square shape in cross section and by bending and integrally forming either the flat-plate part 3a alone, or both the flat-plate part 3a and the linking end parts 3b at both ends thereof.

The present invention also relates to the sliding device according to the fifth aspect, **characterized in that** the flat-plate bendable elastic part 3 is configured by bending in alternating directions a flat wire having a square shape in cross section and by bending and integrally forming either the flat-plate part 3a alone, or both the flat-plate part 3a and the linking end parts 3b at both ends thereof.

The present invention also relates to the sliding device according to the sixth aspect, **characterized in that** the flat-plate bendable elastic part 3 is configured by bending in alternating directions a flat wire having a square shape in cross section and by bending and integrally forming either the flat-plate part 3a alone, or both the flat-plate part 3a and the linking end parts 3b at both ends thereof.

The present invention also relates to the sliding device according to the seventh aspect, **characterized in that** the flat-plate bendable elastic part 3 is configured by bending in alternating directions a flat wire having a square shape in cross section and by bending and integrally forming either the flat-plate part 3a alone, or both the flat-plate part 3a and the linking end parts 3b at both ends thereof.

The present invention also relates to the sliding device according to the eighth aspect, **characterized in that** the flat-plate bendable elastic part 3 is configured by bending in alternating directions a flat wire having a square shape in cross section and by bending and integrally forming either the flat-plate part 3a alone, or both the flat-plate part 3a and the linking end parts 3b at both ends thereof.

The present invention also relates to the sliding device according to any of the first through seventeenth aspects, **characterized in that** in the flat-plate bendable elastic part 3, the plate width of a high-load region W, where higher loads are applied than in the other regions of the flat-plate part 3a during elastic bending deformation, is set to a greater width than is the plate width of a low-load region X, where lower loads are applied than in the high-load region W; and the plate width varies depending on the region.

The present invention also relates to an electronic device which uses a sliding device, characterized in using the sliding device according to any of the first through eighteenth aspects, wherein a main body part and a superposed part are superposed together, the superposed part is slid or rotatably slid from the superposed state so that the parts move past each other in the direction of the superposed surface, and the main body part and the superposed part are linked by the sliding device so that part of the superposed surface can be exposed; and the main body part in the sliding device serves as the first member 1 or the second member 2, while the superposed part serves as the second member 2 or the first member 1.

### EFFECTS OF THE INVENTION

Because the present invention is configured in the manner described above, a slide urging function similar to conventional practice can of course be satisfactorily exhibited by the elastic urging of the flat-plate bendable elastic part, while the flat-plate bendable elastic part has the configuration of a flat thin plate shape which can be easily manufactured by punching, metal formation, or bending, without the need for a complicated manufacturing operation such as winding a wire material into a coil, as is the case with, e.g., a torsion spring, a spring unit, or the like. Therefore, the elastic part, which has been the cause of cost increases in this type of sliding device, can be conveniently manufactured, which is a heretofore unattained quality; manufacturing costs can of course be greatly reduced, and the shape can be made thinner.

Consequently, the present invention provides a sliding device and an electronic device that uses this sliding device, wherein a slide urging function can be exhibited by the elastic urging of the elastic part (flat-plate bendable elastic part) as in conventional practice, and the heretofore unattained qualities of improved mass productivity, improved cost effectiveness, and a thinner shape can be attained.

In the inventions according to the second, third, and fourth aspects, since the configuration is manufactured by punching, metal formation, or bending of a wire, which are processes suitable for mass production, the flat-plate bendable elastic part is far superior to conventional elastic parts in terms of mass productivity and cost effectiveness.

In the inventions according to the fifth through seventeenth aspects, the flat-plate bendable elastic part has a simple shape suitable for exhibiting sufficient bending elastic urging force, and also has a highly durable configuration capable of more satisfactorily exhibiting a slide urging function.

The invention according to the eighteenth aspect has a highly durable configuration capable of more satisfactorily exhibiting a slide urging function.

The invention according to the nineteenth aspect provides an electronic device that uses a sliding device which reliably and satisfactorily exhibits the operational effects previously described, and which is superior in terms of practicality, mass productivity, and cost effectiveness.

### BEST MODE FOR CARRYING OUT THE INVENTION

Preferred embodiments (the manner in which the present invention is implemented) of the present invention are briefly described below with reference to the diagrams while indicating the effects of the present invention.

Since the elastic part 3 of the present invention is a flat-plate bendable elastic part 3, the flat-plate bendable elastic part 3 has, e.g., a configuration in which the flat-plate part 3a and the linking end parts 3b at both ends are formed by punching in a thin plate material; e.g., a configuration in which the flat-plate part 3a and the linking end parts 3b at both ends are integrally formed by die forming; e.g., a configuration in which a flat wire having a square shape in cross section is formed in a curved shape; or another configuration manufactured by punching, metal forming, or bending, which are suitable processes for mass production. Dramatic improvement in mass productivity and cost reduction can be expected in comparison with conventional elastic parts.

Therefore, the present invention uses a flat-plate bendable elastic part 3 having superior mass productivity and cost effectiveness, whereby an improvement in mass productivity, a reduction in cost, and a thinner shape can be reliably expected in this type of sliding device.

The flat-plate part 3a of the flat-plate bendable elastic part 3 can more satisfactorily exhibit a slide-urging function between the linking end parts 3b at both ends, for example, in cases in which at least two flat-wire parts are aligned at a predetermined interval from each other in the width direction.

Specifically, in cases in which it is difficult to obtain sufficient urging force with the bending elastic urging of only a single flat-wire part and a structure is used whereby a load concentrates in the single flat-wire part, there is concern that the part will tend to undergo plastic deformation and there will be a problem with durability. From this point, if the flat-plate part 3 of the flat-plate bendable elastic part 3 of the present invention has a shape in which at least two flat-wire parts are aligned, the plate-shaped part can be designed so that sufficient urging force can easily be obtained by the total force of bending elastic urging of this plurality of plate-shaped parts, a design for strong urging force can easily be obtained, and the shape is also superior in terms of durability because the load can be distributed among a plurality of plate-shaped parts.

In cases in which, e.g., the flat-plate bendable elastic part 3 has a configuration wherein the flat-plate part 3a is formed into a frame shape having a hole in the center of a thin plate material, and the flat-plate part 3a is formed into a shape in which at least two flat-wire parts as frame edges are aligned at a predetermined interval from each other in the width direction between the linking end parts 3b at both ends, as is shown in the Examples described hereinafter, a shape in which two flat-wire parts are aligned between the linking end parts 3b at both ends can be achieved in a simple manner merely by forming a hole in the thin plate material.

It is also possible to create a design such that sufficient urging force is easily achieved while the flat wires are made thinner despite being designed with a serpentine shape, a design yielding strong urging force can be easily achieved and formed by punching, metal forming, or bending, therefore making it possible to reliably achieve improvement in mass productivity, cost reduction, and a thinner shape.

Furthermore, the flat-plate bendable elastic part 3 may be shaped having attachment holes or substantially C-ring shaped attachment notches at both ends of the flat-plate part 3a, the holes or notches being rotatable interlocking parts that rotatably engage with engaging parts 6 provided to the first member 1 or the second member 2 as in the Examples described hereinafter, and the attachment holes or attachment notches may be configured as the linking end parts 3b, in which case these linking end parts 3b can be formed in a simple manner merely by forming holes or notches in a thin plate material or by bending flat wires.

### [Examples]

Specific examples of the present invention are described with reference to the diagrams.

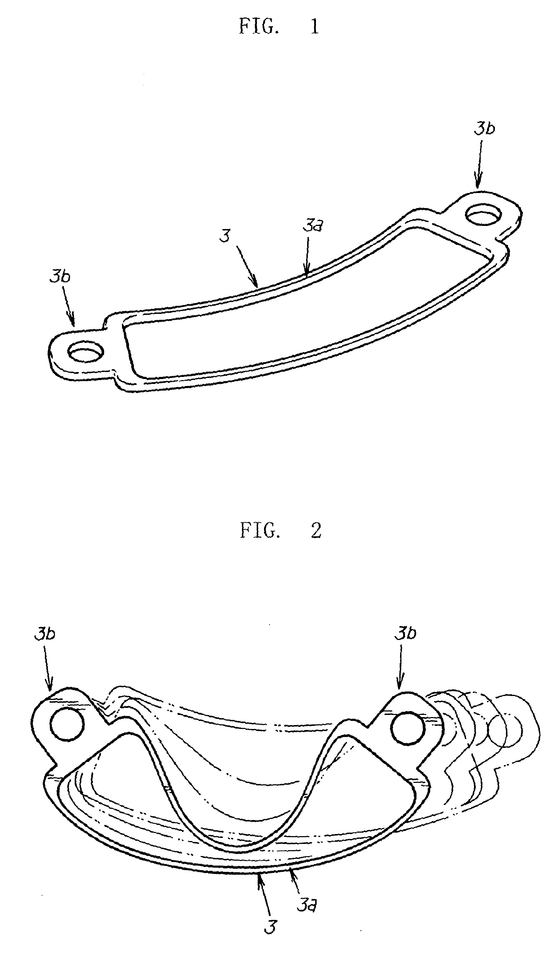

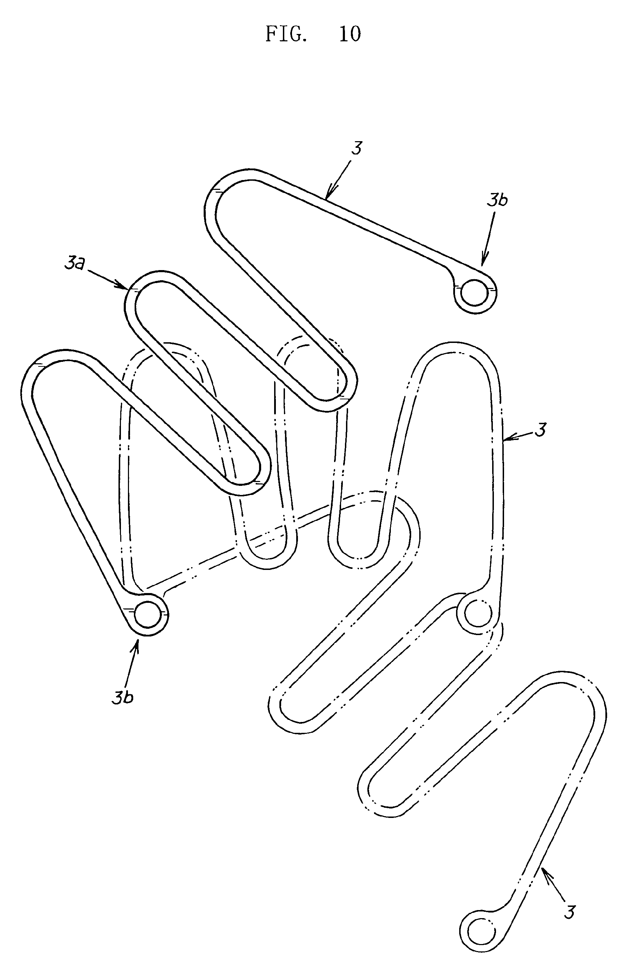

The first example shown in FIGS. 1 through 11 is a sliding device comprising an elastic part 3 between slide-guiding parts 4 provided to a first member 1, wherein the elastic part 3 slidably engages sliding parts 5 provided to a second member 2, and slidably superposes and links the first member 1 and the second member 2 in the direction of a superposed surface, and one end of the elastic part 3 is linked to the first member 1 while the other end is linked to the second member 2; and the sliding device is configured so that an urging force that urges the members in the sliding direction, i.e., to return (close) or advance (open) is created between the first member 1 and the second member 2 by urging from the bending elasticity of the elastic part 3. The elastic part 3 is an elastically and bendably deformable flat-plate bendable elastic part 3 formed into a flat thin plate shape, having linking end parts 3b for linking respectively with the first member 1 and the second member 2 at both ends of a plate-wire shaped or frame-shaped flat-plate part 3a, wherein the flat-plate part 3a is configured to be capable of elastically and bendably deforming in the direction of the plate surface so that the linking end parts 3b at both ends move towards and away from each other, as shown in FIG. 1.

The present example is specifically described hereinbelow.

In the present example, the present invention is applied to an electronic device wherein a main body and a superposed part are superposed together, and the superposed part is slid from the superposed state so that the parts move past each other in the direction of the superposed surface, and the main body part and the superposed part are linked by the sliding device so that part of the superposed surface can be exposed. Specifically, the present invention is applied to a portable slider phone, and is a sliding device wherein the first member 1 is the main body in which an operating part arrayed with numeral keys and function keys is provided on a top surface, the second member 2 is the superposed part which is slidably superposed over the first member 1 and which opens and closes the operating part so that it is concealed or exposed, a liquid crystal display or another display part whereby a predetermined display is shown on the second member 2 is provided on the top surface, and the first member 1 and second member 2 are linked together so as to be able to slide relative to each other.

First, the sliding structure of the sliding device of the present example will be described.

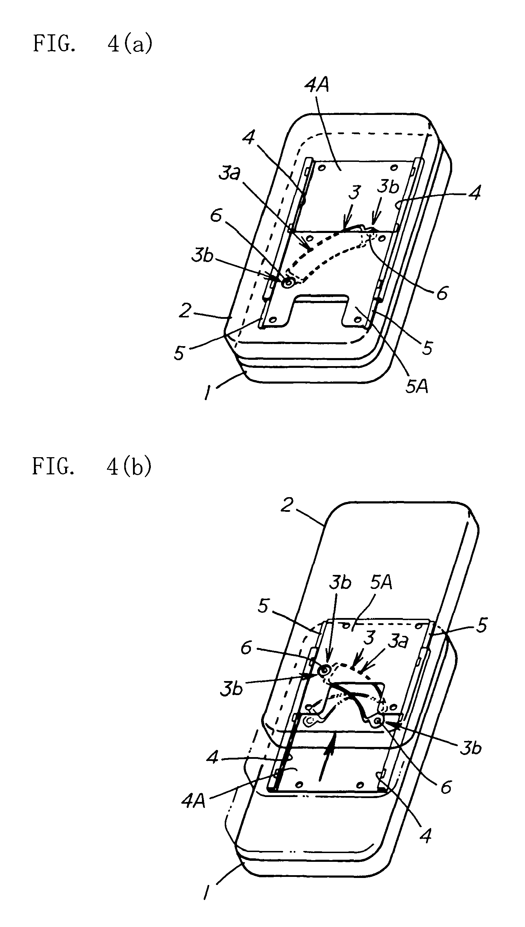

Slide-guiding parts 4 formed into U-shaped guide rail shapes are provided laterally opposite each other to the top surface of the first member 1, as shown in FIG. 4. Specifically, the configuration is such that lateral edges of a slide-guiding part forming plate 4A provided to the top surface of the first member 1 are bent, forming the slide-guiding parts 4 on the left and right sides.

Sliding parts 5 which slidably engage between the left and right slide-guiding parts 4 are provided to the second member 2. Specifically, the configuration is such that the plate edges, as the sliding parts 5 slidably engaging the slide-guiding parts 4, are formed protruding in the lateral edges of a sliding part forming plate 5A provided on the bottom surface of the second member 2, and the configuration is also such that the plate edges are slidably engaged as the sliding parts 5 with the respective left and right slide-guiding parts 4 of the first member 1, linking the first member 1 and second member 2 together so as to be able to slide relative to each other.

One linking end part 3b of the flat-plate bendable elastic part 3 is pivotally fitted to the first member 1. Specifically, the linking end part is pivotally linked to the first member 1 indirectly, i.e., to an engaging part 6 formed at a predetermined location on the top surface of the slide-guiding part forming plate 4A of the first member 1. The other linking part 3b is pivotally linked to the second member 2. Specifically, the linking end part is pivotally linked to the second member 2 indirectly; i.e., to an engaging part 6 formed at a predetermined location on the bottom surface of the sliding part forming plate 5A of the second member 2.

Various structures can be used as the linking structure for pivotally linking the first member 1 and second member 2 with the flat-plate bendable elastic part 3, but in the present example, the structure is such that the first member 1 and second member 2 are provided with the convex engaging parts 6 which fit through and interlock with the attachment holes as the linking end parts 3b at both ends of the flat-plate bendable elastic part 3 described hereinafter, and the engaging parts 6 are pivotally linked by being rotatably fitted through and interlocked with the attachment holes as the linking end parts 3b of the flat-plate bendable elastic part 3.

The configuration may be such that, e.g., the slide-guiding parts 4 themselves are provided as the first member 1, and one linking end part 3b of the flat-plate bendable elastic part 3 is linked to a slide-guiding part 4 as the first member 1, or the configuration may be such that, e.g., one linking end part 3b of the flat-plate bendable elastic part 3 is linked to a slide-guiding part 4 provided to the first member 1 as in the present example, thereby linking the linking end part 3b to the first member 1 via the slide-guiding part 4. Similarly, the configuration may be such that, e.g., the sliding parts 5 themselves are provided as the second member 2, and the other linking end part 3b of the flat-plate bendable elastic part 3 is linked to a sliding part 5 as the second member 2, or the configuration may be such that, e.g., the other linking end part 3b of the flat-plate bendable elastic part 3 is linked to a sliding part 5 provided to the second member 2 as in the present example, thereby linking the linking end part 3b to the second member 2 via the sliding part 5.

Next, the configuration of the flat-plate bendable elastic part 3 of the present example will be described in detail.

In the flat-plate bendable elastic part 3, the flat-plate part 3a is formed between the linking end parts 3b at both ends into a shape in which at least two flat-wire parts are aligned at a predetermined interval from each other in the width direction; and in the present example, the flat-plate part 3a is formed between the left and right linking end parts 3b into a shape in which two arched flat-wire parts are aligned at a predetermined interval from each other, as shown in FIGS. 1 and 2.

Specifically, the flat-plate part 3a is formed into a frame shape having a hole in the center of a thin plate material, and the shape is such that two flat-wire parts as frame edges are aligned between the linking end parts 3b at both ends.

The flat-plate bendable elastic part 3 is shaped having attachment holes or substantially C-ring shaped attachment notches at both ends of the flat-plate part 3a, the attachment holes or notches being rotatable interlocking parts for rotatably interlocking in and pivotally linking with the convex engaging parts 6 provided to the first member 1 or the second member 2, and the attachment holes or attachment notches are configured as the linking end parts 3b. In the present example, the configuration is such that the linking end parts 3b are provided by forming circular attachment holes through the left and right sides of the frame-shaped flat-plate part 3a, as shown in FIGS. 1 and 2.

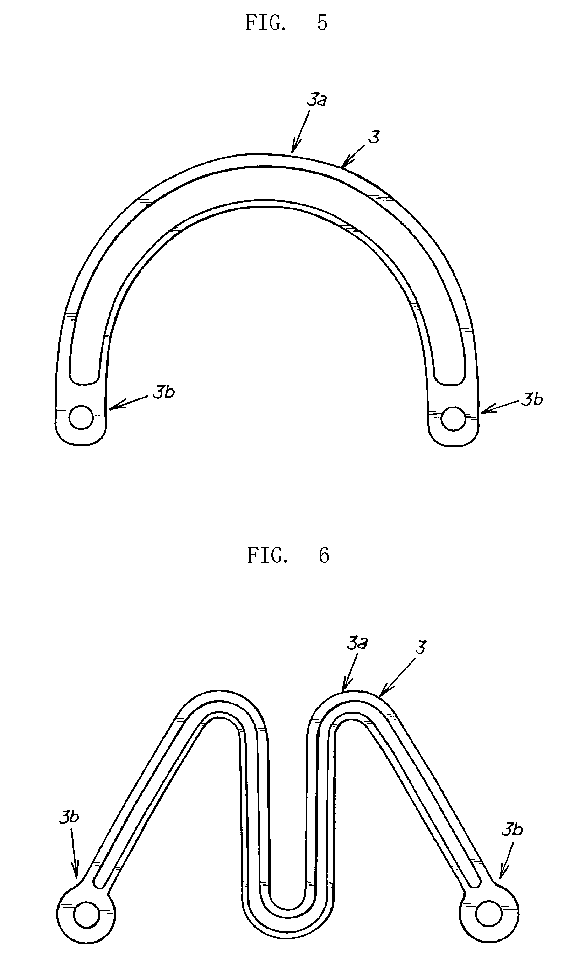

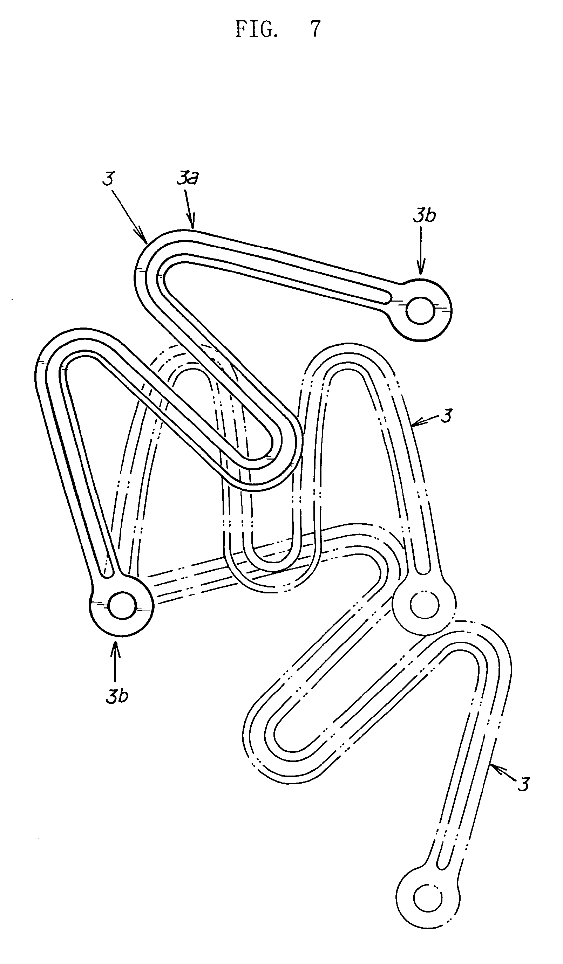

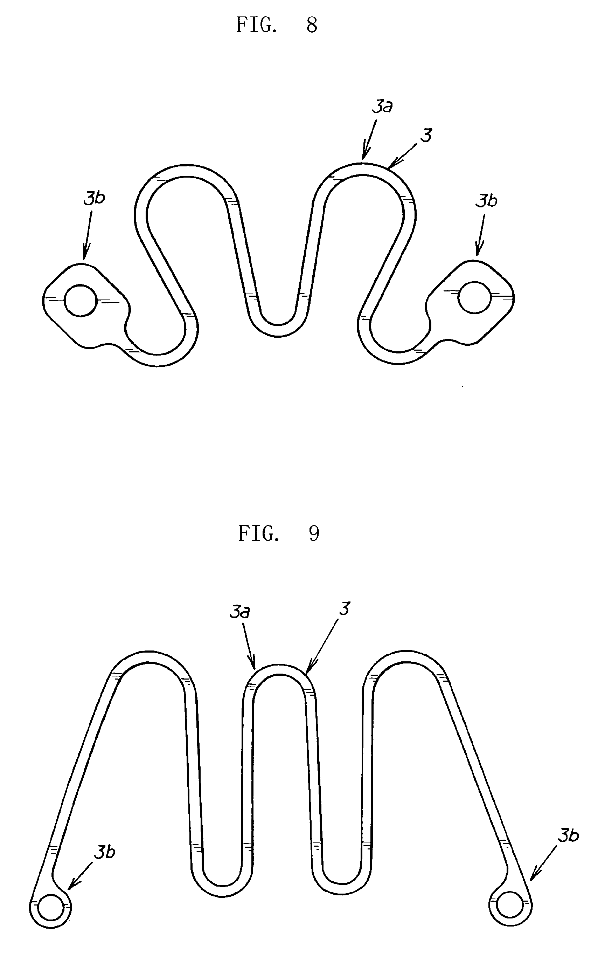

The shape of the flat-plate bendable elastic part 3 is preferably designed as a suitable shape, taking into account the required operability, sliding distance, and other factors. The flat-plate part 3a of the flat-plate bendable elastic part 3 may be strongly curved into a U shape and formed into a frame in the shape of a U in an overall view, as in another example shown in FIG. 5, for example; or the configuration may be such that the flat-plate part 3a is formed into a serpentine frame in the shape of a substantial M in an overall view, as in another example shown in FIGS. 6 and 7, and the linking end parts 3b at both sides can be elastically and bendably deformed in a satisfactory manner so as to move towards and away from each other over significant distances, particularly by using the serpentine shape as shown in FIGS. 6 and 7. The flat-plate part 3a of the flat-plate bendable elastic part 3 may also be formed into a shape having only one serpentine flat-wire part (the flat wire having a square shape in cross section is formed into a serpentine shape) instead of being formed into a frame shape, as in another example shown in FIGS. 8, 9, and 10, for example. In any case, it is preferable that the distance between the linking end parts 3b at both ends be used as a reference, and that a shape be analyzed and designed such that plastic deformation does not occur in the flat-plate bendable elastic part 3 when the flat-plate bendable elastic part 3 is elastically and bendably deformed in order to move the linking end parts 3b towards or away from each other by the desired distance.

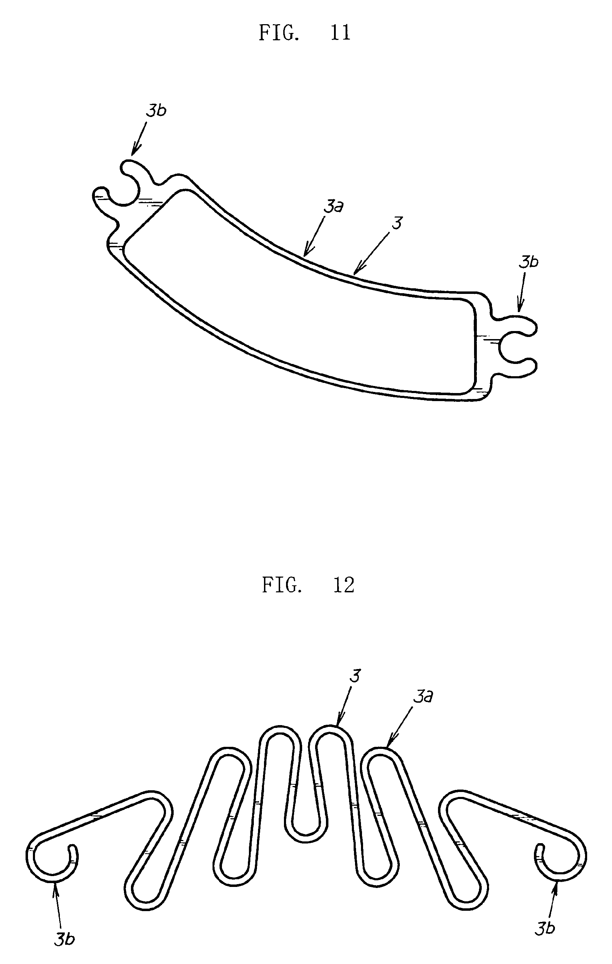

The configuration may also be such that linking end parts 3b are provided by forming substantially C-ring shaped notches rather than attachment holes in both ends of the flat-plate bendable elastic part 3, as in another example shown in FIG. 11. In this case, when the linking end parts 3b and the engaging parts 6 of the first member 1 and second member 2 are pivotally linked together, the C-ring shaped linking end parts 3b, which are partially recessed and opened, can be fitted in and linked to the engaging parts 6 from the side, and it is easy to attach and link the linking end parts to the first member 1 and the second member 2. The linking end parts can also be formed by bending.

More specifically, various members can be used as the thin plate material, but a metal thin plate material is used in the present example.

A hole is formed by punching in the center of this metal thin plate material, providing the frame-shaped flat-plate part 3a, and attachment holes are formed by punching in both ends of the flat-plate part 3a, providing the linking end parts 3b and forming the flat-plate bendable elastic part 3. Furthermore, a barrel is applied to the flat-plate bendable elastic part 3 formed by punching to chamfer the external periphery. The stress in the flat-plate bendable elastic part 3 is reduced by chamfering and rounding off the corners of the external periphery in this manner, and pliability (flexibility) improves.

Therefore, since the flat-plate bendable elastic part 3 can be formed in a simple manner merely by punching the metal thin plate material, mass productivity is far superior to that of a conventional elastic part 3 which requires winding the material into a coil shape or another complicated manufacturing operation, for example, and manufacturing costs can also thereby be reduced. Since the flat-plate bendable elastic part 3, which thus has a flat plate shape in the present example, has an extremely thin shape having a thickness dimension equivalent to only the plate thickness of the metal thin plate material, this shape can contribute to achieving a reduced thickness and improved compactness in the design of the present sliding device provided with this flat-plate bendable elastic part 3, as well as the electronic device that uses this sliding device.

In the present example, the flat-plate bendable elastic part 3 is formed by punching the thin plate material, but the flat-plate bendable elastic part 3 may also be formed by integrally forming the flat-plate part 3a and the linking end parts 3b at both ends by die formation, for example. In this case as well, mass production is as simple as in punching, and manufacturing costs can thereby be reduced.

In the present example, a metal thin plate material is used as the thin plate material constituting the flat-plate bendable elastic part 3, and because of this configuration, the flat-plate bendable elastic part 3 satisfactorily functions as a ground conductor when the flat-plate bendable elastic part 3 is incorporated as a sliding device.

Specifically, the slide-guiding parts 4 (the slide-guiding part forming plate 4A in the previously described direct-slider sliding device and the arcuate groove in the rotating-slider sliding device described hereinafter) provided to the top surface of the first member 1, and the sliding parts 5 (the sliding part forming plate 5A in the direct-slider sliding device and the pin in the rotating-slider sliding device) provided to the bottom surface of the second member 2 are made of metal, for example, and since satisfactory sliding is not achieved with contact between metals, the guiding surfaces (sliding regions) of the slide-guiding parts 4 where satisfactory sliding is needed are configured from members made of resin.

Therefore, in an electronic device (portable phone) in which electronic components are installed in both the first member 1 and the second member 2, for example, the slide-guiding parts 4 on the first member 1 and the sliding parts 5 on the second member 2 are insulated when linked together via the sliding device.

In this respect, in the present example, the flat-plate bendable elastic part 3 is made of metal as previously described, and an electrical connection is established between the slide-guiding parts 4 on the first member 1 and the sliding parts 5 on the second member 2 via the flat-plate bendable elastic part 3, whereby the flat-plate bendable elastic part 3 exhibits the function of a ground conductor for discharging electricity generated by the electronic components installed in the first member 1 and the second member 2.

Since the flat-plate bendable elastic part 3 has a flat plate shape, when the ends thereof are linked respectively to the slide-guiding parts 4 and the sliding parts 5, the contact surface area is extremely large because of the surface contact with the first member 1 and the second member 2, unlike cases in which point contact or linear contact is made respectively with the slide-guiding parts 4 and the sliding parts 5, as is the case with a rod-shaped member having a circular cross-sectional shape, for example. From this point as well, the flat-plate bendable elastic part 3 according to the present example exhibits a satisfactory grounding function.

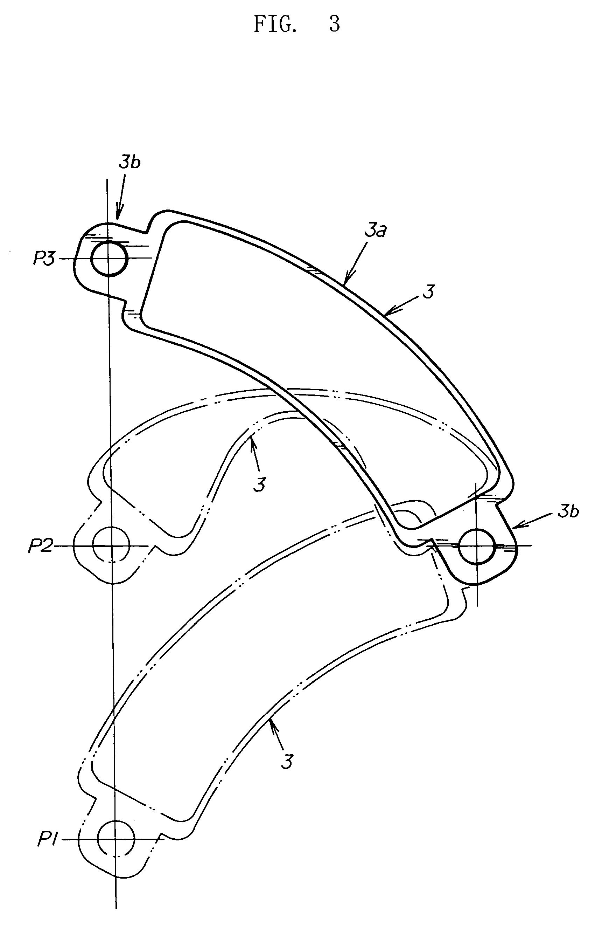

FIG. 3 shows the action of the flat-plate bendable elastic part 3 when the second member 2 is slidably moved relative to the first member 1 of the sliding device of the present example configured as described above.

In FIG. 3, symbol P1 indicates a linked position P1 between the engaging parts 6 of the second member 2 and the linking end parts 3b of the flat-plate bendable elastic part 3 when the second member 2 (superposed part) is in a superposed closed position relative to the first member 1 (main body part) as in FIG. 4(a); symbol P2 similarly indicates a linked position P2 between the second member 2 and the flat-plate bendable elastic part 3 when the second member 2 is slid relative to the first member 1, and the position of the first engaging part 6 and the position of the second linking part 6 are aligned in a transverse direction orthogonal to the sliding direction; and symbol P3 indicates a linked position P3 between the second member 2 and the flat-plate bendable elastic part 3 when the second member 2 is in a slid open position relative to the first member 1 as shown in FIG. 4(b).

The present example is designed so that one linking end part 3a is linked with the first member 1 while the other linking end part 3a is linked with the second member 2 in a state in which the flat-plate bendable elastic part 3 is bendably and elastically deformed against its own elasticity, and the flat-plate bendable elastic part 3 undergoes slight elastic deformation in a flat bent configuration rather than being in a freely extended state (free state) when the second member 2 is in a superposed closed position (the linked position P1 in FIG. 3) or a slid open position (the linked position P3 in FIG. 3) relative to the first member 1.

Therefore, since the elasticity of the flat-plate bendable elastic part 3 still urges sliding to occur in the linked positions P1 and P3 so as to move the engaging parts 6 away from each other, the second member 2 is urged to stay positioned in the superposed closed position by the force that urges the members to slide (close) when the second member 2 is in a superposed closed position relative to the first member 1 as shown in FIG. 4(a); and the second member 2 is urged to stay positioned in the slid open position by the force that urges the members to advance (open) when the second member 2 is in the slid open position relative to the first member 1, as shown in FIG. 4(b).

In other words, when the second member 2 is slid relative to the first member 1, a force that urges the members to return (close) acts on the members in the sliding direction, whereby the second member 2 returns until the second member 2 is slidably moved a predetermined length relative to the first member 1 (specifically, until the second member 2 reaches the linked position P2 from the linked position P1 as shown in FIG. 3), but when the second member 2 is slidably moved a predetermined length, a force that urges the members to advance (open) acts on the members in the sliding direction, whereby the second member 2 advances. In other words, to describe an example of a case in which the second member 2 is slidably moved from the superposed closed position to the slid open position relative to the first member 1, for example, a force that urges the second member 2 to return is exerted in the sliding range from the linked position P1 up to the linked position P2 in FIG. 3, and a force that urges the member to advance is exerted in the sliding range from the linked position P2 up to the linked position P3 in FIG. 3.

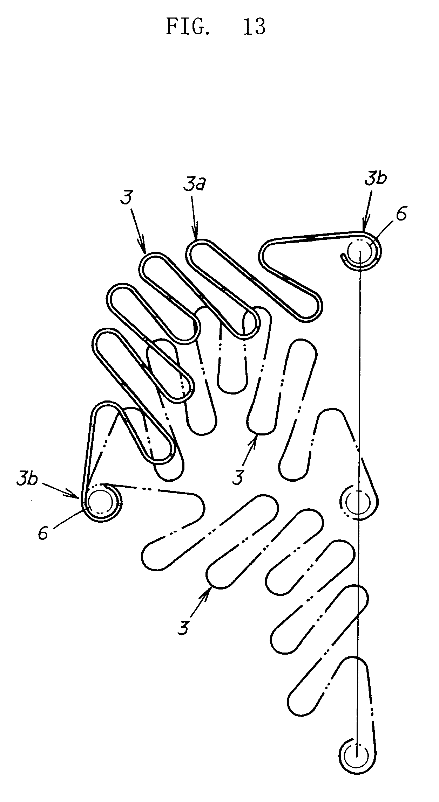

In the example shown in FIGS. 12 and 13, the flat-plate bendable elastic part 3 is configured by bending (curving) a flat wire having a square shape in cross section and forming a flat-plate part 3a and linking end parts 3b.

Specifically, in the example shown in FIGS. 12 and 13, a configuration in which a flat wire (angular wire rod) is bent in alternating directions into an entirely flat elastic part 3 may be formed by punching, but in the present example, the elastic part 3 is formed by bending a flat wire, and the linking end parts 3b at both ends are furthermore formed by Bending into a C-shape. Therefore, in the present example, one angular wire is successively and repeatedly bent back and forth into an S shape, allowing elastic bending deformation to occur in the direction of the plate surface and producing elasticity in the spreading direction, and a flat-plate bendable elastic part 3 is obtained that is easy to manufacture, has good bending elasticity, and can be fashioned in a thinner shape.

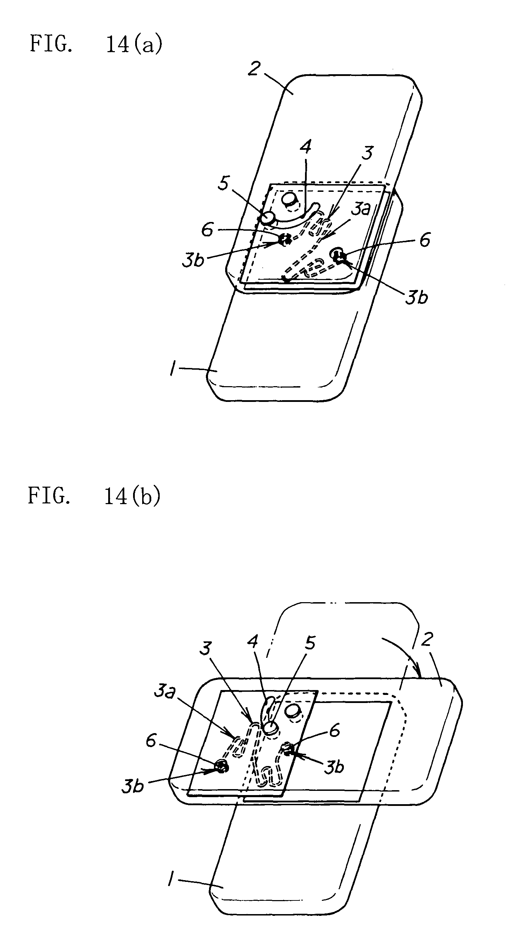

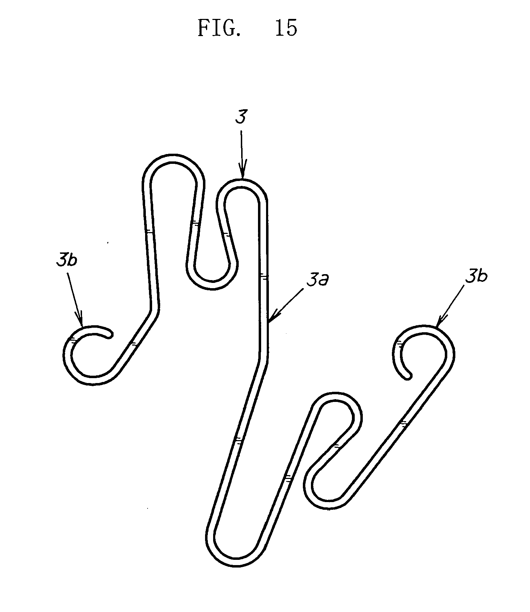

FIGS. 14, 15, and 16 show a second example in which the present invention is applied to a rotating-slider sliding device, wherein a flat wire having a square shape in cross section similar to the example in FIG. 12 is formed into a serpentine shape, as shown in FIG. 15. Furthermore, in this example, the flat wire is formed by bending into a serpentine shape similar to the case in FIG. 12, and the linking end parts 3b are also formed by this bending.

In further detail, in the second example, an arcuate groove is provided as a slide-guiding part 4 to the second member 2, a pin which rotatably and slidably engages with the slide-guiding part 4 of the first member 1 is provided as the sliding part 5, the pin pivots about a rotating fulcrum, the slide-guiding part 4 and the sliding part 5 are rotatably and slidably engaged, and the second member 2 is linked to the first member 1 in a manner that allows the second member 2 to rotate and slide 90° horizontally, as shown in FIG. 14.

Specifically, in this example, the sliding device is applied to a superposed portable slider phone. In this configuration, a sliding device such as the one shown in FIGS. 1 through 11 is provided, the second member is slid to an open position as shown in FIG. 14(a), and the second member can be rotatably slid 90° by the sliding device of the second example in this open position, as shown in FIG. 14(b).

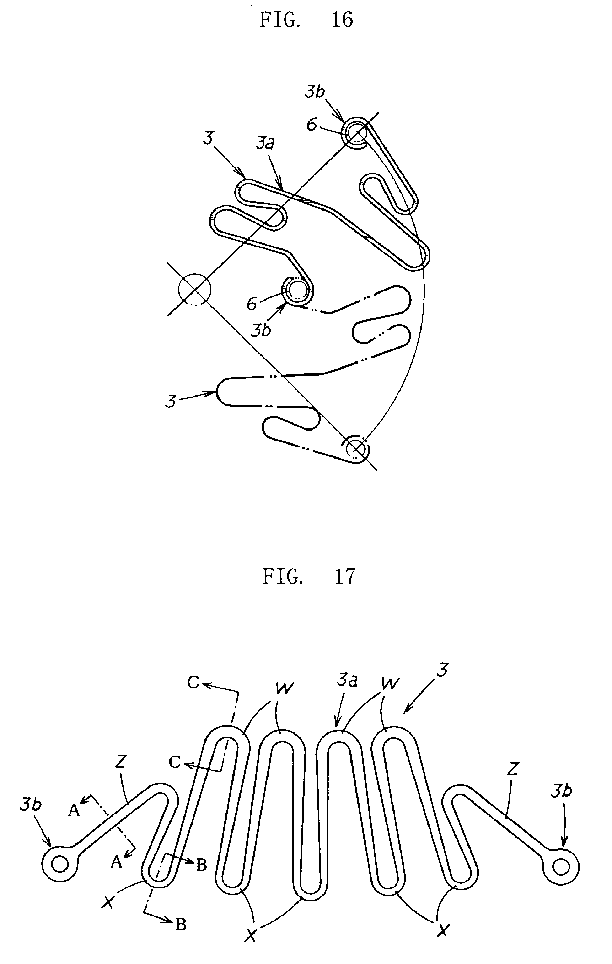

In the example shown in FIG. 12 and the example shown in FIG. 15, durability tests were conducted using flat-plate bendable elastic parts 3 formed with different cross-sectional shape dimensions from SWP and SUS materials, and it was confirmed that the elastic parts could withstand at least the desired number of 1,000,000 uses when simple sliding or rotational sliding was repeated as shown in FIG. 13 or 16. With a substantially square design having a flat wire thickness of 1 mm or less, for example, it was confirmed that the device could be used even after 1,000,000 cycles.

The shape shown in FIGS. 12 and 15 is a shape whereby a sufficient degree of elasticity is obtained, and a small mounted attachment width and large stroke (sliding stroke length, rotational stroke length) are achieved.

The third example shown in FIGS. 17, 18, 19, and 20 is a case in which the flat-plate part 3a of the flat-plate bendable elastic part 3 is given a shape having one serpentine flat-wire part, wherein the plate width of high-load regions W, where higher loads are applied than in the other regions of the flat-plate part 3a during elastic bending deformation, is designed to be greater in the direction of the plate width than the plate width of low-load regions X, where lower loads are applied than in the high-load regions W, and the plate width varies depending on the region.

Specifically, the flat-plate bendable elastic part 3 is designed so that the plate width of folded regions W, which are disposed in parallel on one side of the serpentine flat-plate part 3a as the high-load regions W where high loads are applied during elastic bending deformation, are designed to be greater than the plate width of folded regions X, which are disposed in parallel on the opposite side as the low-load regions X where lower loads are applied than in the high-load regions W, and the plate width differs between the folded regions W on one side and the folded regions X on the other side.

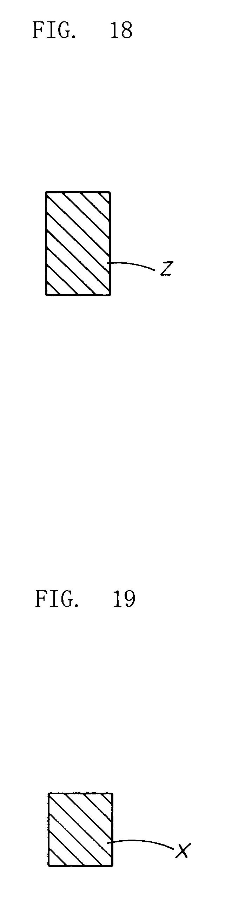

In the present example, the width of each region is set according to regions (high-load regions W and low-load regions X) where the load is different when elastic bending deformation is applied, which can be determined in advance by their shape. Specifically, the folded regions aligned on one side are high-load regions W having a large width, as shown in FIG. 17, the high-load regions W and linear regions Y face each other across gaps, the folded regions aligned on the other side are low-load regions X having a small width, and the widths of regions where different loads are applied during elastic bending deformation are appropriately set according to their shape. The relationship between the plate widths of the linear regions Z, the high-load regions W, and the low-load regions X positioned transversely throughout the flat-plate bendable elastic part 3 according to the present example is designed as shown in FIGS. 18, 19, and 20 (W > Z > X).

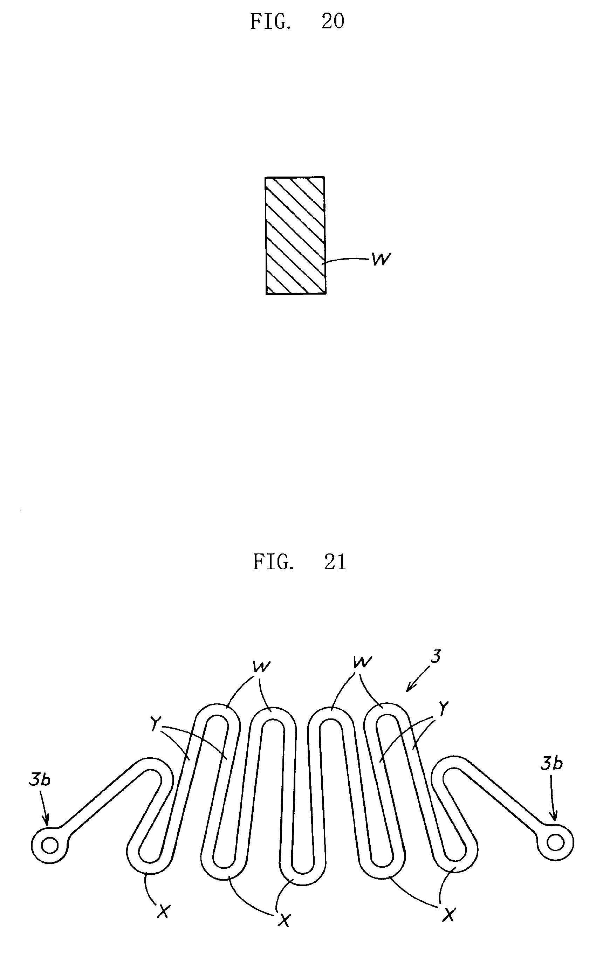

In a flat-plate part 3a shaped with a serpentine flat-wire part, for example, an adaptation method is used in which the lengths of the linear regions Y between the high-load regions W and the low-load regions X is increased in order to adapt the part to the load (stress) during elastic bending deformation plate width direction, as shown in FIG. 21. However, with this method, the flat-plate bendable elastic part 3 increases in size, leading to an increase in the size of the sliding device itself. There is also a problem with a reduction in the moveable range of the flat-plate bendable elastic part 3.

In this respect, in the present example, the load-bearing performance can be dramatically improved merely by designing the high-load regions W (folded regions) to have large plate width and the low-load regions X (folded regions) to have small plate width, making it possible to reliably improve the load-bearing performance without increasing the size of the flat-plate bendable elastic part 3.

Since the present example can be achieved through punch formation or die formation, the configuration is easily achieved.

A serpentine shape was used in the present example as a configuration in which plate width differed depending on the region, but the present invention is not limited to this option alone, and suitable modifications can be made to the design as long as the configuration exhibits the characteristics of the present example, such as applying the present invention in a case in which two of the previously described frame-shaped flat-plate parts 3a are used.

The present invention is not limited to the present example, and specific configurations having each of the structural requirements can be suitably designed.

### BRIEF DESCRIPTION OF THE DRAWINGS

FIG. 1 is an explanatory perspective view showing the flat-plate bendable elastic part 3 according to the first example;
FIG. 2 is an explanatory plan view showing elastic bending deformation of the flat-plate bendable elastic part 3 according to the first example;
FIG. 3 is an explanatory operating plan view of the flat-plate bendable elastic part 3 according to the first example;
FIG. 4 is an explanatory view of the sliding action of an electronic device using the sliding device according to the first example;
FIG. 5 is an explanatory plan view showing separate example 1 of the flat-plate bendable elastic part 3 according to the first example;
FIG. 6 is an explanatory plan view showing separate example 2 of the flat-plate bendable elastic part 3 according to the first example;
FIG. 7 is an explanatory operating plan view of the flat-plate bendable elastic part 3 shown in FIG. 6 according to the first example;
FIG. 8 is an explanatory plan view showing separate example 3 of the flat-plate bendable elastic part 3 according to the first example;
FIG. 9 is an explanatory plan view showing separate example 4 of the flat-plate bendable elastic part 3 according to the first example;
FIG. 10 is an explanatory operating plan view of the flat-plate bendable elastic part 3 shown in FIG. 9 according to the first example;
FIG. 11 is an explanatory plan view showing separate example 5 of the flat-plate bendable elastic part 3 according to the first example;
FIG. 12 is an explanatory plan view showing separate example 6 of the flat-plate bendable elastic part 3 according to the first example;
FIG. 13 is an explanatory operating plan view of the flat-plate bendable elastic part 3 shown in FIG. 12 according to the first example;
FIG. 14 is an explanatory view showing the sliding action of an electronic device using the sliding device according to the second example;
FIG. 15 is an explanatory plan view of the flat-plate bendable elastic part 3 according to the second example;
FIG. 16 is an explanatory operating plan view of the flat-plate bendable elastic part 3 shown in FIG. 15 according to the second example;
FIG. 17 is an explanatory plan view of the flat-plate bendable elastic part 3 according to the third example;
FIG. 18 is a cross-sectional view along line A-A shown in FIG. 17;
FIG. 19 is a cross-sectional view along line B-B shown in FIG. 17;
FIG. 20 is a cross-sectional view along line C-C shown in FIG. 17; and
FIG. 21 is an explanatory plan view of the flat-plate bendable elastic part 3 according to an example compared with the third example.

## Claims

1. A sliding device for linking a second member superposed over a first member so as to enable the second member to slide in the direction of a superposed surface or to rotatably slide in the direction of a superposed surface, the sliding device comprising:
a slide-guiding part provided to the first member or the second member;
a sliding part provided to the second member or the first member and either slidably or both rotatably and slidably engaged with the slide-guiding part; and
an elastic part for creating an urging force in the sliding direction when the second member is slid or rotatably slid in the direction of the superposed surface relative to the first member, the elastic part being provided between the first member and second member, linked at one end to the first member, and linked at the other end to the second member, the sliding device **characterized in that**:
the elastic part is an elastically and bendably deformable flat-plate bendable elastic part having linking end parts linked directly or indirectly to the first member and the second member, respectively, at both ends of a flat-plate part having a flat wire shape, a frame shape, or another thin plate shape; and the flat-plate part is configured to be capable of elastically and bendably deforming in the direction of the plate surface so that the linking end parts at both ends move towards and away from each other.

2. The sliding device according to claim 1, **characterized in that** the flat-plate bendable elastic part is configured by punching a thin plate material to form the flat-plate part and the linking end parts at both ends thereof.

3. The sliding device according to claim 1, **characterized in that** the flat-plate bendable elastic part is configured by integrally forming the flat-plate part and the linking end parts at both ends thereof by die formation.

4. The sliding device according to claim 1, **characterized in that** the flat-plate bendable elastic part is configured by bending a flat wire having a square shape in cross section and forming the flat-plate part or the flat-plate part and the linking end parts at both ends thereof.

5. The sliding device according to claim 1, **characterized in that** the flat-plate bendable elastic part has a configuration wherein the flat-plate part is formed between the linking end parts at both ends into a shape in which at least two plate-wire shaped parts are aligned at a predetermined gap from each other in the width direction.

6. The sliding device according to claim 2, **characterized in that** the flat-plate bendable elastic part has a configuration wherein the flat-plate part is formed between the linking end parts at both ends into a shape in which at least two plate-wire shaped parts are aligned at a predetermined gap from each other in the width direction.

7. The sliding device according to claim 3, **characterized in that** the flat-plate bendable elastic part has a configuration wherein the flat-plate part is formed between the linking end parts at both ends into a shape in which at least two plate-wire shaped parts are aligned at a predetermined gap from each other in the width direction.

8. The sliding device according to claim 4, **characterized in that** the flat-plate bendable elastic part has a configuration wherein the flat-plate part is formed between the linking end parts at both ends into a shape in which at least two plate-wire shaped parts are aligned at a predetermined gap from each other in the width direction.

9. The sliding device according to claim 5, **characterized in that** the flat-plate bendable elastic part has a configuration wherein the flat-plate part is formed into a frame shape having a hole in the center of a thin plate material, and the flat-plate part is formed into a shape in which at least two plate-wire shaped parts as frame edges are aligned between the linking end parts at both ends at a predetermined gap from each other in the width direction.

10. The sliding device according to claim 6, **characterized in that** the flat-plate bendable elastic part has a configuration wherein the flat-plate part is formed into a frame shape having a hole in the center of a thin plate material, and the flat-plate part is formed into a shape in which at least two plate-wire shaped parts as frame edges are aligned between the linking end parts at both ends at a predetermined gap from each other in the width direction.

11. The sliding device according to claim 7, **characterized in that** the flat-plate bendable elastic part has a configuration wherein the flat-plate part is formed into a frame shape having a hole in the center of a thin plate material, and the flat-plate part is formed into a shape in which at least two plate-wire shaped parts as frame edges are aligned between the linking end parts at both ends at a predetermined gap from each other in the width direction.

12. The sliding device according to claim 8, **characterized in that** the flat-plate bendable elastic part has a configuration wherein the flat-plate part is formed into a frame shape having a hole in the center of a thin plate material, and the flat-plate part is formed into a shape in which at least two plate-wire shaped parts as frame edges are aligned between the linking end parts at both ends at a predetermined gap from each other in the width direction.

13. The sliding device according to claim 4, **characterized in that** the flat-plate bendable elastic part is configured by bending in alternating directions a flat wire having a square shape in cross section and by bending and integrally forming either the flat-plate part alone, or both the flat-plate part and the linking end parts at both ends thereof.

14. The sliding device according to claim 5, **characterized in that** the flat-plate bendable elastic part is configured by bending in alternating directions a flat wire having a square shape in cross section and by bending and integrally forming either the flat-plate part alone, or both the flat-plate part and the linking end parts at both ends thereof.

15. The sliding device according to claim 6, **characterized in that** the flat-plate bendable elastic part is configured by bending in alternating directions a flat wire having a square shape in cross section and by bending and integrally forming either the flat-plate part alone, or both the flat-plate part and the linking end parts at both ends thereof.

16. The sliding device according to claim 7, **characterized in that** the flat-plate bendable elastic part is configured by bending in alternating directions a flat wire having a square shape in cross section and by bending and integrally forming either the flat-plate part alone, or both the flat-plate part and the linking end parts at both ends thereof.

17. The sliding device according to claim 8, **characterized in that** the flat-plate bendable elastic part is configured by bending in alternating directions a flat wire having a square shape in cross section and by bending and integrally forming either the flat-plate part alone, or both the flat-plate part and the linking end parts at both ends thereof.

18. The sliding device according to any of claims 1 through 17, **characterized in that** in the flat-plate bendable elastic part, the plate width of a high-load region, where higher loads are applied than in the other regions of the flat-plate part during elastic bending deformation, is set to a greater width than is the plate width of a low-load region, where lower loads are applied than in the high-load region; and the plate width varies depending on the region.

19. An electronic device which uses a sliding device, **characterized in** using the sliding device according to any of claims 1 through 18, wherein a main body part and a superposed part are superposed together, the superposed part is slid or rotatably slid from the superposed state so that the parts move past each other in the direction of the superposed surface, and the main body part and the superposed part are linked by the sliding device so that part of the superposed surface can be exposed; and the main body part in the sliding device serves as the first member or the second member, while the superposed part serves as the second member or the first member.
